# EUROPÄISCHE PATENTANMELDUNG

(11) **EP 4 364 928 A1**
(43) Veröffentlichungstag der Anmeldung: **08.05.2024**
(21) Anmeldenummer: 22205495.9
(22) Anmeldetag: 04.11.2022
(51) Int. Cl.: B29C 65/02, B29L 23/20

(54) **VORRICHTUNG ZUM HERSTELLEN VON TUBENKÖRPERN MIT VERBESSERTER KÜHLUNG EINER SCHWEISSNAHT**

(71) Anmelder: PackSys Global AG, 8630 Rüti (CH)
(72) Erfinder: Läubli, Julius, 8645 Jona (CH); Gut, Urs, 8307 Effretikon (CH); Fischer, Matthias, 8627 Grüningen (CH); Zinniker, Peter, 8472 Seuzach (CH)
(74) Vertreter: Patent- und Rechtsanwälte Behrmann Wagner PartG mbB

(57) **Zusammenfassung**

Die Erfindung betrifft eine Vorrichtung (1) zum Herstellen von Tubenkörpern für Verpackungstuben aus einer Materialbahn (3), aufweisend Schweißmittel (2) zum Verschweißen der Materialbahn (3), bevorzugt in einer Schweißzone der Materialbahn (3) und, entlang einer Transportrichtung der Materialbahn (3) und ein zusammen mit der Materialbahn (3) mitlaufendes Band, welches, bevorzugt in Zusammenwirken mit einem weiteren mitlaufenden Band, dazu eingerichtet ist, die Materialbahn (3), bevorzugt die Schweißzone, nach dem Passieren der Schweißmittel (2) zu kontaktieren und bevorzugt mit einer Druckkraft senkrecht zur Transportrichtung zu beaufschlagen, eine den Schweißmitteln (2) nachgelagerte Kühleinrichtung (10) zum Abkühlen des Bandes und der verschweißten Materialbahn (3), wobei die Kühleinrichtung (10) einen sich entlang der Transportrichtung der Materialbahn (3) erstreckenden Kühlkörper (11) mit einer auf eine zu kühlende Oberfläche des Bandes gerichtete Kühlfläche (12) aufweist, die wenigstens eine Austrittsöffnung (13) zum Austritt eines auf das Band gerichteten Gasvolumenstrom aufweist, wobei die Kühleinrichtung (10) wenigstens zwei Kühlrollen (20) aufweist, die mit Vorspanneinrichtungen (22) gelagert und senkrecht zur Transportrichtung an das Band angedrückt werden.

## Beschreibung

Die vorliegende Erfindung betrifft eine Vorrichtung zum Herstellen von Tubenkörpern für Verpackungstuben aus einer Materialbahn. Insbesondere betrifft die vorliegende Erfindung eine derartige Vorrichtung mit einer effektiveren Kühlung einer durch die Verbindung der Längsrandseiten der Materialbahn in einer Schweißzone erzeugten Schweißnaht.

Vorrichtungen zum Herstellen von Tubenkörpern sind aus dem Stand der Technik bekannt. Diese umfassen im Allgemeinen einen sich in Axialrichtung erstreckenden Dorn, um welchen eine ein- oder mehrlagige Materialbahn, beispielsweise ein Kunststofflaminat, zur Herstellung einer Rohrform umformbar ist und Schweißmittel zum Verschweißen der umgeformten Materialbahn, beispielsweise eine Induktionsschweißeinrichtung.

Dabei ist auch bereits bekannt, insbesondere bei der Verwendung einer Materialbahn aus Kunststofflaminat, dass die Vorrichtung ein äußeres und vorzugsweise auch ein inneres, jeweils umlaufendes, und bevorzugt antreibbares Band, beispielsweise aus Metall, mitunter auch Schweißband genannt, aufweist, welches oder welche die Materialbahn kontaktieren, mittransportieren und ggf. klemmen oder mit einem Druck beaufschlagen.

Mittels der durch eine Schweißeinrichtung erhitzbaren Bänder wird die umgeformte Materialbahn in einem Kontaktbereich erhitzt und dadurch in Längsrichtung verschweißt. Im Anschluss daran ist eine Kühlung, insbesondere im Bereich der Schweißzone, sinnvoll oder gar erforderlich. Das wenigstens eine Band fixiert währenddessen die Rohrform der Materialbahn und schützt die frische Schweißnaht.

Bei bekannten Vorrichtungen sind zur Kühlung bereits stationäre Kühleinrichtungen bekannt, die in Kontakt mit der Materialbahn, insbesondere im Bereich der Schweißzone, kommt. Zur Reibungsminimierung kann beispielsweise ein PTFE-Streifen vorgesehen sein, der einem entsprechenden Verschleiß unterliegt. Weiterhin sind auch Metalllegierungen und graphitartige Materialien mit geringem Reibkoeffizienten bekannt, welche zu Kühlzwecken in Kontakt mit der Materialbahn gebracht werden, die aber trotzdem einem Verschleiß unterliegen und damit entsprechend Abrieb generieren, der zu unerwünschten Verschmutzungen führt.

Weiterhin ist aus dem Stand der Technik bereits eine stationäre Kühleinrichtung bekannt, die mikroporöse Gasaustrittsöffnungen in einer dem Band zugeordneten Oberfläche aufweist, wodurch Gas zum Erzeugen eines Gaskissens zwischen der Oberfläche und dem zugeordneten Band austreten und entsprechende Wärme leiten, insbesondere ableiten, kann. Eine derartige Vorrichtung wird in der EP 2 502 725 A1 beschrieben.

Als Weiterentwicklung beschreibt die EP 3 753 710 A1 der Anmelderin eine Vorrichtung und ein Verfahren, in dem eine Kühleinrichtung zum Einsatz kommt, die in der Lage ist, zwischen der Kühleinrichtung und dem Band, welches die Schweißzone der Materialbahn klemmt, führt und mittransportiert, eine turbulente Luftströmung zu erzeugen, bei der eine optimierte Kühlleistung durch eine deutlich verbesserte Wärmeübertragung erreicht wird, ohne dass ein entsprechender Verschleiß der Kühleinrichtung durch eine direkte Kontaktierung mit dem Band und/oder mit der verschweißten Materialbahn verursacht wird.

Die vorangehend beschriebene Technologie ermöglicht zwar bereits eine effektive und auch ausreichend starke Kühlung der Schweißzone der Materialbahn. Um eine möglichst optimale Ausbildung der Schweißnaht zu ermöglichen, ist es neben einer ausreichenden Kühlung unter anderem auch wünschenswert oder vorteilhaft, eine Druckkraft auf die Schweißzone, senkrecht zur Transportrichtung der Materialbahn, auszuüben, um besonders bevorzugt bereits kurz nach dem Verschweißen und damit noch im plastischen Zustand oder während der Kristallisation der Schweißnaht diese zu verpressen. Um die entsprechenden Kräfte zu generieren, benötigt/verbraucht die vorangehend beschriebene effektive Kühlung mittels einer turbulenten Gasströmung einen zu großen Gasstrom oder ein zu großes Gasvolumen, um die entsprechenden Druckkräfte über das Band/ die Bänder auf die Schweißnaht oder Schweißzone auszuüben.

Vor diesem Hintergrund besteht die Aufgabe der vorliegenden Erfindung darin, eine Vorrichtung zur Herstellung von Tubenkörpern für Verpackungstuben aus einer Materialbahn so weiterzuentwickeln, dass die Nachteile im Stand der Technik überwunden werden, insbesondere so, dass eine effektive und gleichzeitig weitestgehend oder vollständig verschleißfreie Kühlung und Druckbeaufschlagung des Bandes und/oder der Materialbahn im Bereich der Schweißzone ermöglicht wird. Diese Aufgabe wird mit einer Vorrichtung mit den Merkmalen des Anspruchs 1 gelöst.

Vorteilhafte Ausführungsformen sind Gegenstand der nachfolgenden Beschreibung, der Figuren sowie der Unteransprüche.

Nachfolgend vorrichtungsmäßig offenbarte und beanspruchte Merkmale sollen auch als verfahrensmäßig offenbart und beansprucht gelten, und umgekehrt.

Bei der erfindungsgemäßen Vorrichtung zum Herstellen von Tubenkörpern für Verpackungstuben aus einer Materialbahn, aufweisend Schweißmittel zum Verschweißen der Materialbahn, bevorzugt in einer Schweißzone der Materialbahn, und entlang einer Transportrichtung der Materialbahn sowie mit einem, zusammen mit der Materialbahn mitlaufenden, Band, welches, bevorzugt im Zusammenwirken mit einem weiteren mitlaufenden Band, dazu eingerichtet ist, die Materialbahn, bevorzugt die Schweißzone der Materialbahn, nach dem Passieren der Schweißmittel zu kontaktieren und bevorzugt mit einer Druckkraft senkrecht zur Transportrichtung zu beaufschlagen, wobei die Vorrichtung ferner eine den Schweißmitteln nachgelagerte Kühleinrichtung zum Abkühlen des Bandes und der verschweißten Materialbahn aufweist, wobei die Kühleinrichtung einen sich entlang der Transportrichtung der Materialbahn erstreckenden Kühlkörper aufweist, der wiederum eine auf eine zu kühlende Oberfläche des Bandes gerichtete Kühlfläche umfasst, die wenigstens eine Austrittsöffnung zum Austritt eines auf das Band gerichteten Gasvolumenstroms aufweist, sieht erfindungsgemäß vor, dass die Kühleinrichtung wenigstens zwei Kühlrollen aufweist, die mit Vorspann¬einrichtungen gelagert und senkrecht zur Transportrichtung an das Band angedrückt werden.

Durch die erfindungsgemäße Vorrichtung werden die Vorteile eines kontaktlosen Kühlens durch einen Gasvolumenstrom mit den Vorteilen eines kontaktbasierten Kühlens und der daraus resultierenden Möglichkeit zur Aufbringung oder Ausübung von Druckkräften auf die frische Schweißnaht kombiniert, ohne dass dadurch oder dabei ein Bauteil oder eine Baugruppe verwendet wird oder verwendet werden muss, die einen merklichen Verschleiß aufweist und dementsprechend beim Betrieb der Vorrichtung in regelmäßigen Abständen ersetzt oder erneuert werden muss.

Die erfindungsgemäße Lösung hat dabei erkannt, dass mit den vorgesehenen Kühlrollen, die zwar nur mit einem Teil ihres Außenumfangs oder Außenoberfläche/Lauffläche und damit nur entsprechend kurz mit dem Band in Kontakt kommt, zwar nur eine verhältnismäßig geringe Wärmebertragung oder Kühlleistung erreicht werden kann, dass diese aber besonders gut geeignet sind, um die entsprechenden Druckkräfte auf das Band und/oder die Materialbahn, insbesondere im Bereich der Schweißzone, auszuüben und weiterhin besonders gut geeignet sind, um mit einer Kühleinrichtung oder Mitteln einer Kühleinrichtung kombiniert zu werden, die, bevorzugt aufgrund von Ausnutzung eines turbulenten Gasvolumenstroms, zwar eine besonders gute Wärmeübertragung/Kühlleistung aufweisen, ihrerseits aber verhältnismäßig schlecht oder unwirtschaftlich genutzt werden können, um Druckkräfte auf das Band oder die Materialbahn zu übertragen. Durch die Kombination von Kühlrollen und einem Gasvolumenstrom zum Kühlen der Materialbahn kann die Längserstreckung der der Kühleinrichtung verkürzt werden. Dies wiederum ermöglicht, dass der Luftspalt zwischen Kühlelement und Schweissband kleiner dimensioniert werden kann, als beispielsweise bei der Lehre der EP 3 753 710 A1. Der kleinere Luftspalt erhöht die Wärmeleitfähigkeit. Dadurch kann die Kühlleistung verbessert und auf das Erzeugen von Turbulenzen verzichtet werden.

In der vorliegenden Offenbarung werden verschiedene Richtungen mit Bezug zur Transportrichtung angegeben/definiert. Die Transportrichtung soll die Richtung sein, in der die Materialbahn durch die Vorrichtung transportiert wird und entlang derer die Schweißnaht oder Längsschweißnaht ausgebildet wird. Als Richtung senkrecht zur Transportrichtung soll eine Richtung verstanden werden, die, insbesondere bei überlappend angeordneten Längsrandseiten der Materialbahn zur Ausbildung der Schweißnaht, im Wesentlichen senkrecht, auf den Längsrandseiten der Materialbahn und zudem senkrecht auf der Transportrichtung steht. Als weitere Richtung, die sozusagen zusammen mit der Transportrichtung und der vorangehend beschriebenen Senkrechten auf der Transportrichtung ein dreidimensionales Koordinatensystem aufspannt, soll eine Richtung quer zur Transportrichtung definiert werden. Diese steht, wie bereits implizit angegeben, sowohl senkrecht auf der Transportrichtung als auch senkrecht auf der vorhergehend genannten Senkrechten zur Transportrichtung.

Die erfindungsgemäße Realisierung von zwei Kühlrollen mit einer Vorspanneinrichtung zur Lagerung und zum Andrücken der Kühlrollen senkrecht zur Transportrichtung führt dazu, dass in einem entsprechend wohldefinierten Kraftbereich Anpresskräfte oder Andruckkräfte über die Kühlrollen auf das Band und dadurch wenigstens mittelbar auch auf die Materialbahn im Bereich der Schweißzone ausgeübt werden können. Durch das Vorsehen von wenigstens zwei Kühlrollen kann in besonders vorteilhafter Weise ein über eine Kühlstrecke verhältnismäßig gleichbleibender Druck erreicht oder realisiert werden, auch wenn nicht jeder einzelne Punkt des mitlaufenden Bandes für sich oder gleichmäßig mit einer entsprechenden Andrückkraft beaufschlagt wird. Die Vorspannung der Vorspanneinrichtung kann dabei bevorzugt mechanisch, beispielsweise über Federmittel, oder pneumatisch, beispielsweise über grundsätzlich bekannte Pneumatikzylinder oder Membranaktuatoren, gewährleistet werden.

In einer ersten vorteilhaften Ausführungsform der Vorrichtung kann vorgesehen sein, dass eine Vorspanneinrichtung zur Lagerung mehrerer Kühlrollen dient und bevorzugt die Kühlrollen mehrstufig an das Band andrückt. Eine Lagerung von mehreren Kühlrollen mit einer gemeinsamen Vorspanneinrichtung kann beispielsweise erreicht werden, wenn zwischen den besagten Kühlrollen eine mechanisch oder pneumatisch wirksame Verbindung oder Kopplung besteht. Ein mehrstufiges Andrücken kann beispielsweise erreicht werden, wenn sowohl die Kühlrollen verbindende oder koppelnde Elemente als auch die einzelnen Kühlrollen für sich genommen vorgespannt sind oder mit entsprechenden Vorspannmitteln - beispielsweise Federn oder pneumatischen Zylindern - in entsprechender Wirkverbindung stehen. Dies erlaubt einerseits eine konstruktiv einfache Ausgestaltung der Lagerung der Kühlrollen. Gleichzeitig ermöglicht dies eine Art Selbstausrichtung oder Selbstjustierung der Kühlrollen untereinander oder miteinander, sodass ein möglichst gleichmäßiger Anpressdruck über die Länge der Kühleinrichtung in Transportrichtung erreicht wird.

In einer weiteren, besonders bevorzugten Variante der Vorrichtung kann vorgesehen sein, dass die Vorspanneinrichtung die wenigstens zwei Kühlrollen derart gemeinsam lagert und andrückt, dass die Kühlrollen senkrecht zur Transportrichtung beweglich und/oder vorgespannt gelagert sind und, bevorzugt paarweise, um eine oberhalb der Kühlrollen angeordnete, quer zur Transportrichtung verlaufende Rotationsachse rotierbar gelagert sind. Dies erlaubt in besonders vorteilhafter Weise ein gleichmäßiges Anpressen oder Andrücken der Kühlrollen. Eine derartige Lagerung ist nicht auf eine Lagerung von zwei Kühlrollen beschränkt. Bei mehr als zwei Kühlrollen können die jeweiligen Kühlrollen für sich um eine insgesamt gemeinsame Rotationsachse rotieren, auch wenn die Abstände oder Radien zur entsprechenden Rotationsachse für unterschiedliche Kühlrollen unterschiedlich ausfallen. Die senkrecht zur Transportrichtung bewegliche und/oder vorgespannte Lagerung der wenigstens zwei Kühlrollen hat den Vorteil, dass ein annähernd konstanter Anpressdruck auf das Band und damit auf die Materialbahn, insbesondere die Schweißzone, erreicht wird.

In einer ebenfalls besonders bevorzugten Ausführungsform der Vorrichtung kann vorgesehen sein, dass die Kühlrollen so angeordnet sind, dass in Transportrichtung zwischen zwei benachbarten Kühlrollen eine Austrittsöffnung des Kühlkörpers zum Austritt eines auf das Band gerichteten Gasvolumenstroms angeordnet ist. Dadurch kann die Kühleinrichtung insgesamt besonders kompakt realisiert werden, sodass insgesamt auf einer gegebenen oder vorgegebenen Kühlstrecke entlang der Transportrichtung verhältnismäßig viele Kühlrollen und Austrittsöffnungen des Kühlkörpers angeordnet werden können. Weiterhin kann dadurch in besonders vorteilhafter Weise eine besonders effektive Kombination zwischen hoher Kühlleistung einerseits - durch den Gasvolumenstrom - und Ausüben einer Druckkraft oder Andrückkraft andererseits - durch die Kühlrollen - realisiert werden, um die Ausbildung und das Aushärten oder Verfestigen der Schweißnaht optimal zu unterstützen.

Wie nachfolgend noch im Detail beschrieben werden wird, kann besonders vorteilhaft vorgesehen sein, dass eine entsprechende Vielzahl von Kühlrollen und Austrittsöffnungen in Transportrichtung abwechselnd nacheinander oder nebeneinander angeordnet oder ausgebildet sind. Beispielsweise können vier Kühlrollen und, jeweils zwischen zwei Kühlrollen angeordnete, drei Austrittsöffnungen vorgesehen sein. Auch eine entsprechende Verdoppelung mit acht Kühlrollen und sechs oder sieben zwischen den Kühlrollen angeordnete Austrittsöffnungen sind vorteilhaft möglich.

Gemäß einer weiteren, besonders vorteilhaften Variante der Vorrichtung kann vorgesehen sein, dass der Kühlkörper in Transportrichtung hintereinander angeordneten Rollenausnehmungen aufweist, die zur Aufnahme eines Teils der Kühlrollen dienen. Die Integration der Rollenausnehmungen in den Kühlkörper, der seinerseits auf einer Kühlfläche die Austrittsöffnungen für den Gasvolumenstrom aufweist oder ausbildet, hat den Vorteil, dass insgesamt eine sehr kompakte Ausbildung der Kühleinrichtung ermöglicht wird. Weiterhin ermöglicht dies ein besonders vorteilhaftes Zusammenwirken der kontaktlosen Kühlung durch den Gasvolumenstrom und der kontaktbasierten Kühlung durch die Kühlrollen. Auch die Anpresskräfte oder Andrückkräfte auf das Band durch den Gasvolumenstrom und die Kühlrollen lassen sich entsprechend vorteilhaft miteinander kombinieren oder unterstützen sich gegenseitig entsprechend vorteilhaft, wenn die Kühlrollenausnehmungen in den Kühlkörper integriert sind. Die Kühlrollenausnehmungen können vorteilhaft so gestaltet sein, dass die Kühlrollen ein gewisses Spiel innerhalb des Kühlkörpers haben und dass auf jeden Fall ein unterer, zur Kontaktierung des Bandes vorgesehener Teil der Kühlrolle über den Kühlkörper übersteht oder nach unten aus dem Kühlkörper herausragt, sodass das mitlaufende Band von den Kühlrollen kontaktiert und eine Anpresskraft ausgeübt werden kann, ohne dass der Kühlkörper der Kühleinrichtung mit dem Band in Kontakt kommt.

Eine weitere bevorzugte Variante der Vorrichtung kann vorsehen, dass die Rollenausnehmungen quer zur Transportrichtung durch den gesamten Kühlkörper oder entlang der gesamten Breite des Körpers ausgebildet sind. Dadurch wird einerseits die Bearbeitung des Kühlkörpers zur Ausbildung der Rollenausnehmungen erleichtert. Gleichzeitig erleichtert dies die Montage und Demontage der Kühlrollen an oder in der Kühleinrichtung, insbesondere dem Kühlkörper.

Gemäß einer weiteren, besonders bevorzugten Ausgestaltung der Vorrichtung kann vorgesehen sein, dass der Kühlkörper Gasversorgungskanäle aufweist, die in den Austrittsöffnungen der Kühlfläche münden und senkrecht zur Transportrichtung abschnittsweise zwischen zwei Rollenausnehmungen verlaufen. Auch dadurch kann, wie oben bereits angedeutet, eine besonders gute und bezogen auf den Bauraum kompakte Anordnung der Kühlung auf Basis des Gasvolumenstroms sowie aufgrund des Kontakts mit den Kühlrollen erreicht werden. Die Gasversorgungskanäle können beispielsweise durch eine spanende Bearbeitung des Kühlkörpers der Kühleinrichtung vorgesehen oder realisiert werden.

Ebenfalls kann vorteilhaft vorgesehen sein, dass der Kühlkörper Gasverteilerkanäle aufweist, die Gasanschlussmittel des Kühlkörpers mit einem, bevorzugt mehr als einem, Gasversorgungskanal verbinden. Durch die Gasverteilerkanäle können in einem Kühlkörper entsprechende Teilvolumenströme des Gasvolumenstroms auf die einzelnen Gasversorgungskanäle zu den Austrittsöffnungen verteilt werden. Dadurch wird durch die entsprechende Integration der Gasverteilerkanäle in den Kühlkörpern die Integrationsstufe des Kühlkörpers weiter erhöht und die Führung des Gasvolumenstroms erleichtert. Die Gasverteilerkanäle können bevorzugt auch durch eine spanende Bearbeitung des Kühlkörpers, beispielsweise in Verbindung mit einer entsprechend endseitigen Versiegelung, ausgebildet werden.

In einer weiteren, besonders wünschenswerten Variante der Vorrichtung kann außerdem vorgesehen sein, dass der Kühlkörper eine separate Kühlkörper-Vorspanneinrichtung aufweist, die den Kühlkörper in Richtung auf das Band, also senkrecht zur Transportrichtung, kraftbeaufschlagt oder vorspannt. Auch die Kühlkörper-Vorspanneinrichtung kann mechanisch oder pneumatisch ausgebildet sein. Dadurch wird beim Austritt eines Gasvolumenstroms aus den Austrittsöffnungen des Kühlkörpers ermöglicht, dass ein Höchstabstand zwischen dem Band und der Kühlfläche des Kühlkörpers eingehalten oder nicht überschritten wird, wobei gleichzeitig ein Kontakt mit dem Band durch den ausströmenden Gasvolumenstrom verhindert wird. Dies erlaubt eine effektive Kühlung oder einen besonders effektiven Wärmeaustausch zwischen dem Band und/oder der Materialbahn und dem Gasvolumenstrom.

Besonders bevorzugt kann dabei vorgesehen sein, dass die Kühlkörper-Vorspanneinrichtung so dimensioniert oder ausgelegt ist, dass bei einem vorgegebenen Gasvolumenstrom durch die Austrittsöffnungen des Kühlkörpers ein Abstand des Kühlkörpers zum Band senkrecht zur Transportrichtung von weniger als 250 µm, bevorzugt weniger als 50 µm, erreicht oder eingehalten wird. Der Gasvolumenstrom kann durch wirtschaftliche Randbedingungen und/oder durch Randbedingungen zur Erzeugung der bevorzugt turbulenten Strömung zwischen dem Kühlkörper und dem Band vorgegeben oder wenigstens eingegrenzt sein. In Abhängigkeit dieses Gasvolumenstroms kann die Kühlkörper-Vorspanneinrichtung entsprechend ausgelegt sein, dass bei einem gegebenen Gasvolumenstrom einerseits ein Abstand zum Band besteht oder aufrechterhalten wird und andererseits der Abstand zum Band weniger als 50 µm oder zumindest weniger als 250 µm beträgt.

In einer weiteren, vorteilhaften Ausgestaltung der Vorrichtung kann vorgesehen sein, dass die Kühlrollen Fluidführungsmittel aufweisen, durch die ein Kühlfluid, bevorzugt Kühlwasser, die Kühlrollen durchströmen kann. Dadurch wird insbesondere verhindert, dass die Lager der Kühlrollen sich im Betrieb nicht aufheizen, was der Abfuhr von Wärme über die Kühlrollen entgegenwirken würde.

Die Kühlrollen können entweder direkt am Mantel gekühlt werden, was eine bessere Kühlwirkung hat aber aufwendiger in der Durchführung des Kühlmedium ist oder aber vereinfacht indirekt über die feste Achse gekühlt werden, was einfacher ist aber eine schlechtere Wärmeübertragung aufweist. Zudem kann das Kühlmedium parallel und/oder seriell einzelne Kühlrollen oder Gruppen von Kühlrollen durchströmen, so dass sich die maximale Kühlleistung bei optimalen Gesamtfluss ergibt.

Es können beispielsweise auch mehrere Kreisläufe oder Teilkreisläufe von Kühlfluid ausgebildet sein, die dann eine entsprechende Anzahl von Kühlrollen durchströmen, wobei bevorzugt die Fluidführung für jede Teilmenge von Kühlrollen eine entsprechende abschnittsweise Gegenstromkühlung realisiert.

Einzelne Ausführungsformen und vorteilhafte Ausgestaltungen der Erfindung werden nachfolgend anhand der lediglich schematischen Zeichnungen näher erläutert. Darin zeigen:
Fig. 1: eine schematische Seitenansicht einer erfindungsgemäßen Kühleinrichtung in einer ersten Ausführungsform;
Fig. 2: eine schematische Darstellung von Kühlrollen samt Vorspanneinrichtungen zur Verwendung in einer erfindungsgemäßen Vorrichtung;
Fig. 3: eine schematische Darstellung von Kühlrollen und Vorspanneinrichtungen zur Verwendung in einer erfindungsgemäßen Vorrichtung gemäß einer zweiten Ausführungsform;
Fig. 4: eine schematische Darstellung von Kühlrollen und Vorspanneinrichtungen zur Verwendung in einer erfindungsgemäßen Vorrichtung gemäß einer dritten Ausführungsform;
Fig. 5: eine schematische Seitenansicht eines Teils einer erfindungsgemäßen Vorrichtung einschließlich einer erfindungsgemäßen Kühleinrichtung.

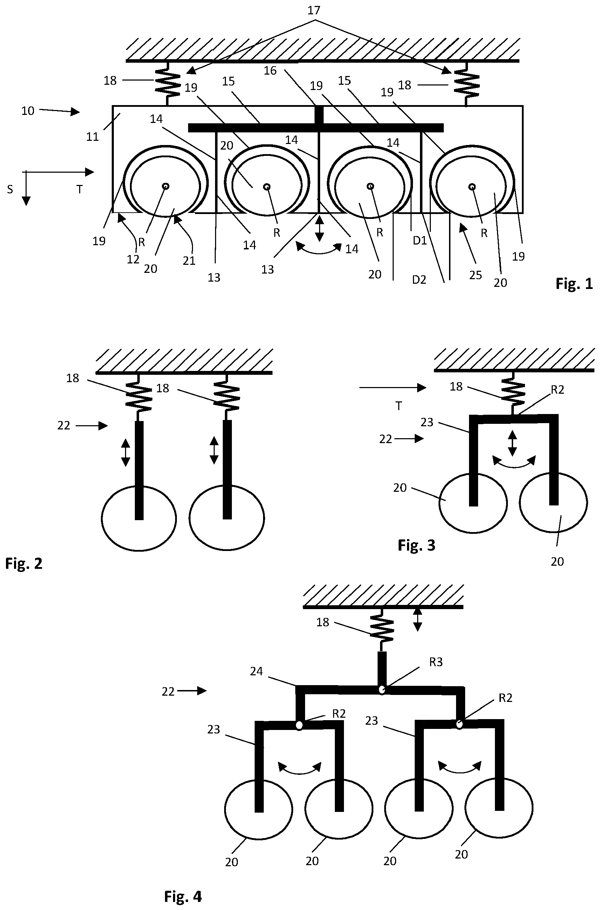

Fig. 1 zeigt eine Kühleinrichtung 10 für eine Vorrichtung zur Herstellung von Tubenkörpern für Verpackungen aus einer Materialbahn, die aus Gründen der Übersichtlichkeit der Darstellung der Fig. 1 nicht im Detail dargestellt ist. Die Kühl¬¬-ein¬richtung 10 umfasst einen Kühlkörper 11, der auf einer Kühlfläche 12 eine Vielzahl von Austrittsöffnungen 13 aufweist, durch die ein Gasvolumenstrom austreten und auf ein der Kühlfläche 12 gegenüberliegend angeordnetes, mitlaufendes Band (in Fig. 1 nicht gezeigt) gerichtet werden kann. Der Kühlkörper 11 kann durch ein Kühlfluid, beispielsweise Wasser gekühlt werden. Die Austrittsöffnungen 13 können bevorzugt so ausgestaltet werden, dass ein turbulenter Gasvolumenstrom erreicht oder erzielt wird, wie beispielsweise in der EP3 753 710 A1 beschrieben. Es kann aber auch ein geringerer Abstand des Kühlkörpers 11 zu dem Band realisiert werden, der dann die Wärmeleitfähigkeit verbessert und eine turbulente Strömung mitunter überflüssig macht. Die Austrittsöffnungen 13 können innerhalb des Kühlkörpers 11 über Gasversorgungskanäle 14 und einen Gasverteilerkanal 15 mit einer Gaseingangsöffnung 16 verbunden sein, die mit entsprechenden Leitungsmitteln oder Schlauchmitteln eine fluidleitende Verbindung zu einer Gasquelle, beispielsweise einer Druckluftquelle, ausbildet. Die letztgenannte Gasquelle ist in Fig. 1 nicht dargestellt.

Der Kühlkörper 11 ist durch eine Kühlkörper-Vorspanneinrichtung 17 in einer Richtung S senkrecht zur Transportrichtung T vorgespannt. Die Kühlkörper-Vorspanneinrichtung 17 kann beispielsweise mechanisch durch eine Feder oder pneumatisch durch einen Pneumatikzylinder oder, wie in der Fig. 1 dargestellt, eine entsprechende Vielzahl einzelner Membranaktuatoren 18 realisiert sein.

In den Kühlkörper 11 integriert sind ferner vier Rollenausnehmungen 19, in denen jeweils eine Kühlrolle 20 um eine Rollenachse R, die quer zur Transportrichtung T verläuft, drehbar gelagert ist. Die Rollenausnehmungen 19 sind so ausgestaltet, dass die Kühlrolle 20 jeweils fast vollständig oder vollständig in der Ausnehmung aufgenommen werden kann. Dies ermöglicht es, dass der Flächeninhalt der Kühlfläche 12 maximiert wird, beispielsweise indem zwischen den Rollenausnehmungen 19 eine doppelt konkave oder bikonkave Struktur des Kühlkörpers 11 ausgebildet wird, die dafür sorgt, dass die ununterbrochene Kühlfläche D2 deutlich größer ist als die minimale Wandstärke D1 des Kühlkörpers 11 zwischen den Rollenausnehmungen 19, beispielsweise auf der Höhe der Achsen der Kühlrollen 20. Die Unterbrechungen 25 in der Kühlfläche 12 in Längsrichtung L zur Durchführung einer Kühlrolle können so minimiert werden, dass bei einem maximalen Abstand zwischen Kühlfläche 12 und Band ein Kontakt oder ein Schleifen der Kühlrollen 20 an den Übergängen zwischen Rollenausnehmung 19 und Kühlfläche 12 vermieden wird.

Die Kühlrollen 20 sind über separate Kühlrollen-Vorspanneinrichtungen unabhängig von der Kühlkörper-Vorspanneinrichtung 17 gelagert und in Richtung S vorgespannt, was aus Gründen der Übersichtlichkeit in der Fig. 1 nicht dargestellt ist. Bezüglich der einzelnen Möglichkeiten zur Lagerung und Vorspannung der Kühlrollen 20 wird beispielhaft auf die Fig. 2 bis 4 verwiesen.

Es ist erkennbar, dass die Kühlrollen 20 im Bereich der Kühlfläche 12 aus dem Kühlkörper 11 herausragen können, und so die Möglichkeit besteht, dass ein Kontakt zwischen einer Außenoberfläche oder Lauffläche 21 der Kühlrollen 20 mit einem gegenüberliegend zur Kühlfläche 12 angeordnetem und verlaufendem/umlaufenden Band (in Fig. 1 nicht dargestellt) erreicht wird, wobei die Kühlrollen 20 verschleißfrei oder nahezu verschleißfrei auf dem Band abrollen und in einer Richtung S senkrecht zur Transportrichtung T einer Materialbahn trotzdem ein Abstand zwischen der Kühlfläche 12 und den Austrittsöffnungen 13 des Kühlkörpers 11 und des Bands bestehen bleibt oder eingehalten wird, insbesondere wenn ein aus den Austrittsöffnungen 13 ausströmender Gasvolumenstrom eine Vorspannkraft der Kühlkörper-Vorspanneinrichtung 17 wenigstens teilweise kompensiert. Durch die Kühlrollen 20 wird das Band in die Schweissnaht gedrückt und entsprechend deformiert was in einer grösseren Beabstandung des Bandes von der Kühlfläche 12 resultiert. Insgesamt kann die Kühlkörper-Vorspanneinrichtung 17 so dimensioniert sein, dass der Kühlkörper 11 ohne aus den Austrittsöffnungen austretendem Gasvolumenstrom auf dem Band aufliegt und erst die Bereitstellung des Gasvolumenstroms, beispielsweise über eine Druckluftquelle, ein Abheben des Kühlkörpers 11 vom Band bewirkt.

Zwischen zwei benachbarten Kühlrollen 20 ist entlang der Richtung S senkrecht zur Transportrichtung T der jeweilige Gasversorgungskanal 14 so ausgebildet, dass dieser die jeweilige Austrittsöffnung 13 fluidleitend mit dem Gasverteilerkanal 15 verbindet und zwischen den Rollenausnehmungen 19 verläuft. Dadurch kann auf kompaktem Raum oder einer entsprechend kurzen Länge in Transportrichtung t sowohl eine kontaktlose Kühlung durch eine Wärmeleitung des Bandes mit der Kühlfläche 12 des Kühlkörpers 11als auch eine entsprechende Kühlung über die Kühlrollen 20 realisiert werden. Besonders vorteilhaft kann über den Gasvolumenstrom aus den Austrittsöffnungen 13 als auch über die Kühlrollen 20 eine Anpresskraft in der Richtung S senkrecht zur Transportrichtung T auf ein nicht dargestelltes Band ausüben, wobei besonders vorteilhaft die Kühlrollen einen geringeren Beitrag zur Kühlleistung, gleichzeitig aber einen höheren Beitrag zum Anpressdruck bereitstellen und umgekehrt die Wärmeleitung zwischen dem Band und der Kühlfläche 12 eine verhältnismäßig hohe Kühlleistung und der zur Beabstandung der Kühlfläche 12 vom Band erzeugte Gasvolumenstrom eine verhältnismäßig geringe Kraft in Richtung S senkrecht zur Transportrichtung T bereitstellt oder erzeugt.

In den Fig. 2 bis 4 sind unterschiedliche Ausgestaltungen von Kühlrollen-Vorspanneinrichtungen 22 zum Lagern und Andrücken der Kühlrollen 20 dargestellt. In der Fig. 2 ist eine individuelle Lagerung einer jeden Kühlrolle 20 durch entsprechende Membranaktuatoren 18 realisiert. In der Fig. 3 sind die Kühlrollen 20 paarweise über eine mechanische Kopplung, beispielsweise eine Brückenanordnung 23, miteinander verbunden, wobei die Brückenanordnung 23 mit einem Membranaktuator18 zusammenwirkend ausgebildet ist. Dadurch wird, wie durch die Pfeildarstellungen in Fig. 3 angedeutet, erreicht, dass die Kühlrollen 20 in der Richtung S senkrecht zur Transportrichtung T beweglich gelagert und vorgespannt sind und dass darüber hinaus auch eine Rotation um eine Rotationsachse R2 sowie eine entsprechende Rückstellkraft bei einer Rotation um die Rotationsachse R2 erreicht wird, wobei die Rotationsachse R2 bevorzugt oberhalb der Kühlrollen 20 angeordnet ist.

Die Fig. 4 zeigt eine beispielhafte Kühlrollen-Vorspanneinrichtung 22, in der jeweils zwei Kühlrollen 20, vergleichbar zur Darstellung der Fig. 3, mit einer Brückenanordnung 23 mechanisch miteinander gekoppelt und um die Rotationsachse R2 rotierbar gelagert sind, wobei die beiden Brückenanordnungen 23 ihrerseits nochmals über eine übergeordnete Brückenanordnung 24 miteinander mechanisch gekoppelt sind, wodurch eine weitere Rotationsachse R3 ausgebildet wird. Zudem verfügt die Kühlrollen-Vorspanneinrichtung 22 über entsprechende Membranaktuatoren 18.

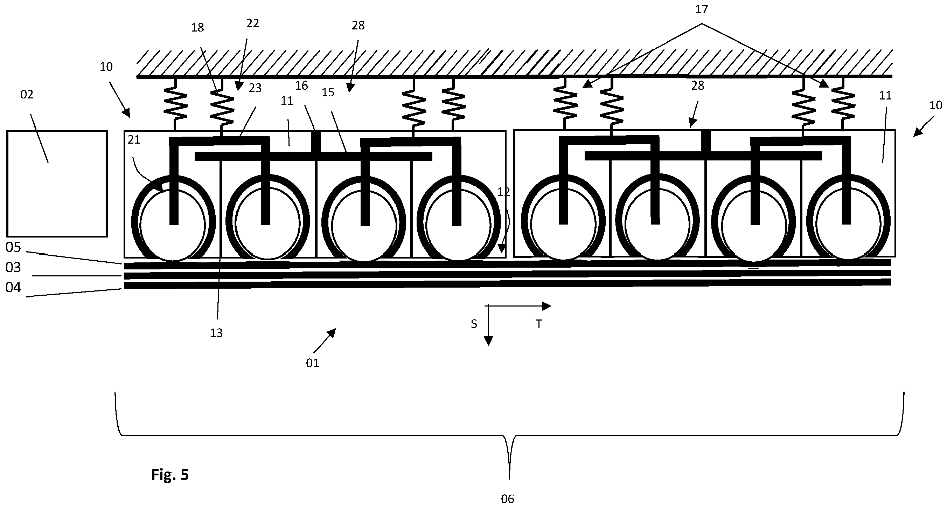

Die Fig. 5 zeigt einen Ausschnitt aus einer erfindungsgemäßen Vorrichtung 01 mit einer Kühleinrichtung 10, die sich aus zwei separaten Kühlmodulen 28 zusammensetzt, die jeweils im Wesentlichen in einer Ausführungsform gehalten sind, die sich aus einer Kombination der Fig. 1 und 3 ergibt. Die beiden Kühlmodule 28 sind im weitesten Sinne identisch ausgebildet. Der Kühleinrichtung 10 sind in Transportrichtung vorangehend Schweißmittel 02 angeordnet, die die Seitenränder oder Längsseitenränder einer Materialbahn 03 miteinander verbinden, insbesondere miteinander verschweißen. Nach Passieren der Schweißmittel 02 wird die Materialbahn 03 samt der frisch ausgebildeten Schweißzone zwischen einem unteren Band 04 und einem oberen Band 05 geführt in Transportrichtung T an den zwei Kühlmodulen 28 vorbeitransportiert, wobei beim Passieren der Kühlstrecke 06 einerseits eine ausreichende Kühlung der Schweißzone der Materialbahn 03 erreicht werden soll und gleichzeitig ein Klemmen oder Einspannen der Materialbahn 03, insbesondere im Bereich der Schweißzone zwischen dem unteren Band 04 und dem oberen Band 05, erreicht werden soll.

Gemäß der Ausführungsform der Fig. 5 wird dies dadurch erreicht, dass jede Austrittsöffnung 13 eine, Gasströmung im Zwischenraum zwischen dem Kühlkörper 11 und dem oberen Band 05 erzeugt und somit eine möglichst geringe Beabstandung zwischen Kühlfläche 12 und Band 5 herzustellen, dass trotz des Luftspalts der Luftkissens eine effektive Wärmeübertragung zwischen dem Band 05 und der Kühlfläche 12 ermöglicht wird, so dass eine gute Kühlleistung erzielt wird. Zudem werden über die Kühlrollen 20 Andrückkräfte in Richtung S senkrecht zur Transportrichtung T auf das obere Band 05 aufgebracht und über den Kontaktbereich zwischen der Lauffläche 21 und dem oberen Band 05 die zusätzliche Kühlung des oberen Bands 05 bewirkt. Dazu verfügen die Kühlrollen 20 über eine aktive Kühlung mittels eines Kühlfluids.

Sowohl die Kühlrollen 20 als auch die Kühlkörper sind durch Kühlrollen-Vorspanneinrichtungen 22 und Kühlkörper-Vorspanneinrichtungen 17 in Richtung S senkrecht zur Transportrichtung T vorgespannt, wobei die Vorspannung für die Kühlrollen 20 einen Anpressdruck auf das obere Bank 05 realisiert und bezüglich des Kühlkörpers 11 dafür sorgt, dass zwischen dem oberen Band 05 und der Kühlfläche 12 ein Luftkissen aus gebildet wird, wobei der Abstand zwischen der Kühlfläche 12 und dem oberen Band 05 bevorzugt weniger als 250 µm, besonders bevorzugt weniger als 50 µm, beträgt. Dadurch kann eine gute Wärmeleitung zwischen Band 05 und Kühlfläche 12 erreicht werden.

### Bezugszeichenliste

- 01: Vorrichtung
- 02: Schweißmittel
- 03: Materialbahn
- 04: unteres Band
- 05: oberes Band
- 06: Kühlstrecke
- 10: Kühleinrichtung
- 11: Kühlkörper
- 12: Kühlfläche
- 13: Austrittsöffnung
- 14: Gasversorungskanal
- 15: Gasverteilerkanal
- 16: Gaseingangsöffnung
- 17: Kühlkörper-Vorspanneinrichtung
- 18: Membranaktuator
- 19: Rollenausnehmungen
- 20: Kühlrolle
- 21: Lauffläche
- 22: Kühlrollen-Vorspanneinrichtung
- 23: Brückenanordnung
- 24: Brückenanordnung
- 25: Unterbrechung
- 28: Kühlmodul
- Q: Richtung quer zur Transportrichtung
- R: Rollenachse
- R2: Rotationsachse
- R3: Rotationsachse
- S: Richtung senkrecht zur Transportrichtung
- T: Transportrichtung
- D1: ununterbrochene Kühlfläche
- D2: minimale Wandstärke

## Patentansprüche

1. Vorrichtung (1) zum Herstellen von Tubenkörpern für Verpackungstuben aus einer Materialbahn (3), aufweisend Schweißmittel (2) zum Verschweißen der Materialbahn(3), bevorzugt in einer Schweißzone der Materialbahn (3) und, entlang einer Transportrichtung (t) der Materialbahn (3) und ein zusammen mit der Materialbahn (3) mitlaufendes Band, welches, bevorzugt in Zusammenwirken mit einem weiteren mitlaufenden Band, dazu eingerichtet ist, die Materialbahn (3), bevorzugt die Schweißzone, nach dem Passieren der Schweißmittel (2) zu kontaktieren und bevorzugt mit einer Druckkraft senkrecht zur Transportrichtung (s) zu beaufschlagen, eine den Schweißmitteln (2) nachgelagerte Kühleinrichtung (10) zum Abkühlen des Bandes und der verschweißten Materialbahn (3), wobei die Kühleinrichtung (10) einen sich entlang der Transportrichtung (t) der Materialbahn (3) erstreckenden Kühlkörper (11) mit einer auf eine zu kühlende Oberfläche des Bandes gerichtete Kühlfläche (12) aufweist, die wenigstens eine Austrittsöffnung (13) zum Austritt eines auf das Band gerichteten Gasvolumenstroms (V) aufweist,
**dadurch gekennzeichnet,**
**dass** die Kühleinrichtung (10) wenigstens zwei Kühlrollen (20) aufweist, die mit Vorspanneinrichtungen (22) gelagert und senkrecht zur Transportrichtung (s) an das Band angedrückt werden.

2. Vorrichtung (1) nach Anspruch 1,
**dadurch gekennzeichnet,**
**dass** eine Vorspanneinrichtung (22) zur Lagerung mehrere Kühlrollen (20) dient, und bevorzugt die Kühlrollen (20) mehrstufig an das Band andrückt.

3. Vorrichtung (1) nach Anspruch 1 oder 2,
**dadurch gekennzeichnet,**
**dass** die Vorspanneinrichtung (22) wenigstens zwei Kühlrollen (20) derart gemeinsam lagert und andrückt, dass die Kühlrollen (20) senkrecht zur Transportrichtung (T) beweglich gelagert sind und, bevorzugt paarweise, um eine, bevorzugt oberhalb der Kühlrollen (20) angeordnete, quer zur Transportrichtung (T) verlaufende Rotationsachse (R2) rotierbar sind.

4. Vorrichtung (1) nach einem der vorangehenden Ansprüche,
**dadurch gekennzeichnet,**
**dass** die Kühlrollen (20) so angeordnet sind, dass in Transportrichtung (T) zwischen zwei benachbarten Kühlrollen (20) in eine Austrittsöffnung (13) des Kühlkörpers (11) angeordnet ist.

5. Vorrichtung (1) nach einem der vorangehenden Ansprüche,
**dadurch gekennzeichnet,**
**dass** der Kühlkörper (11) in Transportrichtung (T) hintereinander angeordnete Rollenausnehmungen (19) aufweist, die zur Aufnahme wenigstens eines Teils der Kühlrollen (20) dienen.

6. Vorrichtung nach Anspruch 5,
**dadurch gekennzeichnet,**
**dass** die Rollenausnehmungen (19) so angeordnet und ausgebildet sind, insbesondere in die Kühlfläche 12 derart übergehen, dass eine ununterbrochene Kühlfläche (D1) in Längsrichtung (L) zwischen den Rollenausnehmungen (19) größer ist, als die minimale Wandstärke (D2) in Längsrichtung (L) zwischen zwei benachbarten Rollenausnehmungen (19).

7. Vorrichtung (1) nach Anspruch 5 oder 6,
**dadurch gekennzeichnet,**
**dass** sich die Rollenausnehmungen (19) quer zur Transportrichtung (q) durch den gesamten Kühlkörper (11) oder entlang der gesamten Breite des Kühlkörpers (11) erstrecken.

8. Vorrichtung (1) nach einem der Ansprüche 5 bis 7,
**dadurch gekennzeichnet,**
**dass** der Kühlkörper (11) Gasversorgungskanäle aufweist, die in den Austrittsöffnungen (13) münden und senkrecht zur Transportrichtung (T) abschnittsweise zwischen zwei Rollenausnehmungen (19) verlaufen.

9. Vorrichtung (1) nach einem der vorangehenden Ansprüche,
**dadurch gekennzeichnet,**
**dass** der Kühlkörper (11) Gasverteilerkanäle (15) aufweist, die Gasanschlussmittel des Kühlkörpers (11) mit einem, bevorzugt mehr als einem, Gasversorgungskanal verbinden.

10. Vorrichtung (1) nach einem der vorangehenden Ansprüche, **dadurch gekennzeichnet,**
**dass** der Kühlkörper (11) eine separate Kühlkörpervorspanneinrichtung (17) aufweist, die den Kühlkörper (11) in Richtung (S) auf das Band kraftbeaufschlagt.

11. Vorrichtung (1) nach Anspruch 10,
**dadurch gekennzeichnet,**
**dass** die Kühlkörpervorspanneinrichtung (17) so dimensioniert ist, dass bei einem vorgegebenen Gasvolumenstrom durch die Austrittsöffnungen (13) des Kühlkörpers (11) ein Abstand des Kühlkörpers (11) zum Band senkrecht zu Transportrichtung (T) von weniger als 250µm, bevorzugt weniger als 50µm, erreicht oder eingehalten wird.

12. Vorrichtung (1) nach einem der vorangehenden Ansprüche,
**dadurch gekennzeichnet,**
**dass** die Kühlrollen (20) Fluidführungsmittel (26) aufweisen, durch die ein Kühlfuid, bevorzugt Kühlwasser, die Kühlrollen (20) durchströmen kann.
